# FASCICULE DE BREVET EUROPEEN

(11) **EP 3 787 877 B1**
(45) Date de publication et mention de la délivrance du brevet: **22.11.2023**
(21) Numéro de dépôt: 19728486.2
(22) Date de dépôt: 02.05.2019
(51) Int. Cl.: B29C 64/205, B29C 64/321, B29C 64/153, B33Y 30/00

(54) **MACHINE DE FABRICATION ADDITIVE COMPRENANT UN DISPOSITIF DE DISTRIBUTION DE POUDRE PAR DOSEUR A VIS SUR UNE SURFACE MOBILE**
MASCHINE ZUR GENERATIVEN FERTIGUNG MIT EINER VORRICHTUNG ZUM VERTEILEN VON PULVER AUF EINER MOBILEN OBERFLÄCHE MITTELS EINES SCHNECKENVERTEILERS
ADDITIVE MANUFACTURING MACHINE COMPRISING A DEVICE FOR THE DISTRIBUTION OF POWDER ONTO A MOBILE SURFACE USING A SCREW DISTRIBUTOR

(30) Priorité: 03.05.2018 FR 1853835
(43) Date de publication de la demande: 10.03.2021
(73) Titulaire: AddUp, 63118 Cébazat (FR)
(72) Inventeur: GONZALEZ, Antonio, 63118 Cebazat (FR); GONNARD, Olivier, 63040 Clermont-Ferrand Cedex 9 (FR)
(74) Mandataire: Barascou, Frédéric
(86) Numéro de dépôt international: PCT/FR2019/051013
(87) Numéro de publication internationale: WO 2019/211564

(56) Documents cités:
- EP-A1- 2 281 677
- WO-A1-2017/108868

## Description

L'invention se situe dans le domaine de la fabrication additive à base de poudre par fusion des grains de cette poudre à l'aide d'une ou plusieurs sources d'énergie ou de chaleur comme un faisceau laser et/ou un faisceau d'électrons et/ou des diodes.

Plus précisément, l'invention se situe dans le domaine de la fabrication additive par dépôt de lit de poudre et elle vise à alimenter en poudre le dispositif permettant la mise en couche de la poudre de fabrication additive à l'intérieur d'une machine de fabrication additive par dépôt de lit de poudre.

Plus précisément encore, l'invention vise à alimenter une surface mobile de réception de poudre avec un débit de poudre stable et maîtrisé.

La demande WO2017108868 décrit une machine de fabrication additive par dépôt de lit de poudre comprenant une enceinte de fabrication à l'intérieur de laquelle se situe un plan de travail et au moins une zone de travail où des couches de poudre sont étalées et consolidées de manière sélective successivement les unes après les autres.

En vue de réaliser les différentes couches de poudre utiles à la fabrication, la machine décrite dans la demande WO2017108868 comprend un dispositif d'étalement de poudre, tel un rouleau ou une raclette, apte à être déplacé au-dessus de la zone de travail et un dispositif de dépôt de poudre sur le plan de travail comprenant un tiroir de réception de poudre et un injecteur de poudre. Le tiroir est mobile en translation par rapport au plan de travail entre une position rétractée dans laquelle le tiroir s'étend en dehors de la trajectoire du dispositif d'étalement de poudre et une position déployée dans laquelle le tiroir s'étend au moins en partie dans la trajectoire du dispositif d'étalement de poudre. L'injecteur est disposé au-dessus du tiroir de réception de poudre, de manière à distribuer de la poudre sur le tiroir de réception lorsque ce tiroir se déplace entre sa position rétractée et sa position déployée.

Cette demande WO2017108868 prévoit aussi que l'injecteur est raccordé à un réservoir de poudre, par exemple via un raccord de type flexible, et qu'une trémie de dosage peut être interposée entre le réservoir et l'injecteur.

Toutefois, cette demande WO2017108868 ne précise ni un agencement précis de la trémie de dosage, ni un agencement précis des moyens permettant de distribuer la poudre sur le tiroir mobile.

Or, avec une surface de réception de poudre mobile telle que prévue dans la demande WO2017108868, il est nécessaire de délivrer un débit de poudre maîtrisé à la sortie de l'injecteur et stable pendant le mouvement du tiroir.

En effet, la qualité du cordon de poudre déposé sur le tiroir est directement liée à la qualité des pièces fabriquées.

Si le débit de poudre faiblit pendant le mouvement du tiroir, certaines couches de poudre étalées sur la zone de travail auront des épaisseurs insuffisantes par endroits, ce qui conduira à la fabrication de pièces avec des défauts ou non-conformes.

D'autre part, si le débit de poudre est trop important pendant tout ou partie du mouvement du tiroir, une certaine quantité de poudre sera inutilement déposée en excès et viendra augmenter la quantité déjà importante de poudre qui n'est pas consolidée et qui, dans certaines applications comme la fabrication de prothèses médicales, ne peut être réutilisée sans être fondue et reconditionnée à nouveau sous forme de poudre. Le document EP 2 281 677 A1 décrit une machine selon le préambule de la revendication 1.

La présente invention a pour objectif de fournir un dispositif de distribution de poudre capable de délivrer un débit de poudre stable et maîtrisé en au moins un point situé au-dessus d'une surface de réception de poudre mobile et apte à se positionner à proximité d'une zone de travail. L'invention a pour objet une machine selon la revendication 1.

A cet effet, l'invention concerne une machine de fabrication additive par dépôt de lit de poudre, cette machine de fabrication additive comprenant une enceinte de fabrication et au moins une source de chaleur ou d'énergie utilisée pour fusionner de manière sélective une couche de poudre de fabrication additive déposée à l'intérieur de l'enceinte de fabrication. De plus, la machine de fabrication additive comprend au moins une surface de réception de poudre mobile et apte à se déplacer à proximité d'une zone de fabrication située dans l'enceinte de fabrication, un dispositif d'étalement de poudre permettant d'étaler la poudre de la surface de réception mobile vers la zone de fabrication, et au moins un dispositif de distribution de poudre sur la surface de réception mobile.

Selon l'invention, le dispositif de distribution de poudre comprend un réservoir tampon relié à une alimentation en poudre, et un point de distribution de poudre en-dessous duquel se déplace une surface de réception mobile.

Toujours selon l'invention, le dispositif de distribution de poudre comprend un doseur à vis reliant le réservoir tampon et le point de distribution de poudre et permettant de générer un flux continu de poudre du réservoir tampon vers le point de distribution de poudre.

Ce dispositif de distribution de poudre est avantageusement complété par les caractéristiques suivantes, prises seules ou en combinaison :
- les deux vis du doseur ont des pas orientés dans le même sens,
- les deux vis du doseur ont des pas orientés dans des sens opposés,

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue de face schématique d'une machine de fabrication additive selon l'invention,
- la figure 2 est une vue de dessus schématique d'une machine de fabrication additive selon l'invention,
- la figure 3 est une vue en perspective et partiellement en transparence du dispositif de distribution de poudre d'une machine de fabrication additive selon l'invention,
- la figure 4 est une vue en coupe longitudinale du dispositif de distribution de poudre d'une machine de fabrication additive selon l'invention, et
- la figure 5 est une vue en coupe transversale du doseur à vis du dispositif de distribution de poudre d'une machine de fabrication additive selon l'invention.

L'invention est relative à une machine de fabrication additive par dépôt de lit de poudre. La fabrication additive par dépôt de lit de poudre est un procédé de fabrication additif dans lequel une ou plusieurs pièces sont fabriquées par la fusion sélective de différentes couches de poudre de fabrication additive superposées les unes sur les autres. La première couche de poudre est déposée sur un support tel un plateau, puis frittée ou fusionnée sélectivement à l'aide d'une ou plusieurs sources d'énergie ou de chaleur selon une première section horizontale de la ou des pièces à fabriquer. Puis, une deuxième couche de poudre est déposée sur la première couche de poudre qui vient d'être fusionnée ou frittée, et cette deuxième couche de poudre est frittée ou fusionnée sélectivement à son tour, et ainsi de suite jusqu'à la dernière couche de poudre utile à la fabrication de la dernière section horizontale de la ou des pièces à fabriquer.

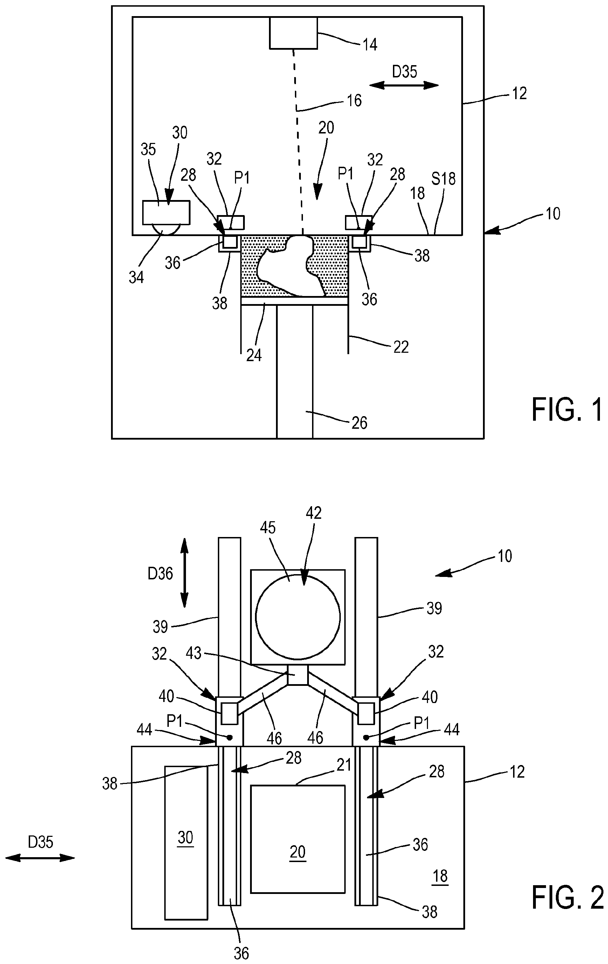

Comme l'illustre la figure 1 et afin de permettre une fabrication additive de pièces par dépôt de lit de poudre, la machine 10 de fabrication additive selon l'invention comprend une enceinte de fabrication 12 et au moins une source 14 de chaleur ou d'énergie utilisée pour fusionner de manière sélective, via un ou plusieurs faisceaux 16, une couche de poudre de fabrication additive déposée à l'intérieur de l'enceinte de fabrication 12.

La ou les sources de chaleur ou d'énergie 14 peuvent prendre la forme de sources capables de produire un ou plusieurs faisceaux d'électrons et/ou un ou plusieurs faisceaux laser. Ces sources sont par exemple un ou plusieurs canons d'électrons et/ou une ou plusieurs sources laser. Afin de permettre une fusion sélective et donc un déplacement du ou des faisceaux d'énergie ou de chaleur 16, chaque source 14 comprend des moyens de déplacement et de contrôle du ou des faisceaux 16.

L'enceinte de fabrication 12 est une enceinte fermée. Une paroi de cette enceinte de fabrication 12 peut comprendre une vitre permettant d'observer la fabrication en cours à l'intérieur de l'enceinte. Au moins une paroi de cette enceinte de fabrication 12 comprend une ouverture donnant accès à l'intérieur de l'enceinte pour des opérations de maintenance ou de nettoyage, cette ouverture pouvant être refermée de manière étanche à l'aide d'une porte pendant un cycle de fabrication. Pendant un cycle de fabrication, l'enceinte de fabrication 12 peut être remplie avec un gaz inerte tel l'azote pour éviter d'oxyder la poudre de fabrication additive et/ou pour éviter les risques d'explosion. L'enceinte de fabrication 12 peut être maintenue en légère surpression pour éviter les entrées d'oxygène, ou maintenue sous vide lorsqu'un faisceau d'électrons est utilisé à l'intérieur de l'enceinte pour fritter ou fusionner la poudre.

A l'intérieur de l'enceinte de fabrication 12, la machine 10 de fabrication additive selon l'invention comprend : un plan de travail horizontal 18 et au moins une zone de fabrication 20 se situant dans le plan de travail 18. Une zone de fabrication 20 est définie par une ouverture 21 prévue dans le plan de travail horizontal 18 et par une chemise de fabrication 22 et un plateau de fabrication 24. La chemise 22 s'étend verticalement sous le plan de travail 18 et elle débouche dans le plan de travail 18 par l'ouverture 21. Le plateau de fabrication 24 coulisse verticalement à l'intérieur de la chemise de fabrication 22 sous l'effet d'un actionneur 26 tel un vérin.

Afin de réaliser les différentes couches de poudre utiles à la fabrication additive de la ou des pièces à fabriquer, la machine de fabrication additive selon l'invention comprend au moins une surface de réception de poudre mobile 28 et apte à se déplacer à proximité d'une zone de fabrication 20 située dans l'enceinte de fabrication. La machine de fabrication additive comprend aussi un dispositif d'étalement de poudre 30 permettant d'étaler la poudre de la surface de réception mobile 28 vers la zone de fabrication 20, et un dispositif de distribution de poudre 32 sur la surface de réception mobile.

Le dispositif d'étalement 30 prend la forme d'une raclette et/ou d'un ou plusieurs rouleaux 34 montés sur un chariot 35. Ce chariot 35 est monté mobile en translation dans une direction horizontale D35 au-dessus de la zone de fabrication 20. Afin d'être entraîné en translation horizontale, le chariot 35 peut être motorisé, ou mis en mouvement par un moteur se situant à l'intérieur ou de préférence à l'extérieur de l'enceinte de fabrication 12 et via un système de transmission de mouvement tels des poulies et une courroie.

De préférence et comme illustré par les figures 1 et 2, la machine de fabrication additive selon l'invention comprend deux surfaces de réception de poudre mobiles 28 et deux dispositifs de distribution de poudre 32, chaque surface de réception de poudre mobile réceptionnant de la poudre distribuée par au moins un dispositif de distribution. Plus en détail, une surface de réception mobile et un dispositif de distribution sont prévus de chaque côté de la zone de fabrication 20 dans la direction horizontale D35 de déplacement du chariot 35 du dispositif d'étalement 30. Ainsi, le dispositif d'étalement de poudre ne fait pas de trajet inutile au-dessus de la zone de fabrication car il peut étaler de la poudre dans les deux sens de sa direction horizontale D35 de déplacement.

Toujours de préférence, une surface de réception de poudre mobile 28 prend la forme d'un tiroir 36. Un tiroir 36 est monté mobile en translation dans une direction horizontale transversale D36 par rapport à la zone de fabrication 20. Un tiroir 36 se déplace entre une position rétractée dans laquelle ce tiroir se situe en dehors de la trajectoire du dispositif d'étalement de poudre 30 et une position déployée dans laquelle ce tiroir s'étend au moins en partie dans la trajectoire du dispositif d'étalement de poudre 30. Idéalement, la direction horizontale transversale D36 dans laquelle se déplace un tiroir 36 est perpendiculaire à la direction horizontale D35 de déplacement du chariot 35 du dispositif d'étalement 30. Avantageusement, les moyens d'entrainement et de guidage en translation d'un tiroir peuvent être placés à l'extérieur de l'enceinte de fabrication pour ne pas encombrer cette enceinte de fabrication.

Un dispositif de distribution de poudre 32 est prévu au-dessus de chaque tiroir 36, et donc au-dessus de chaque surface de réception mobile 28. Chaque tiroir 36, et donc chaque surface de réception mobile 28, est de forme allongée dans la direction horizontale transversale D36 et se déplace sous le dispositif de distribution de poudre lorsque le tiroir passe de sa position rétractée à sa position déployée.

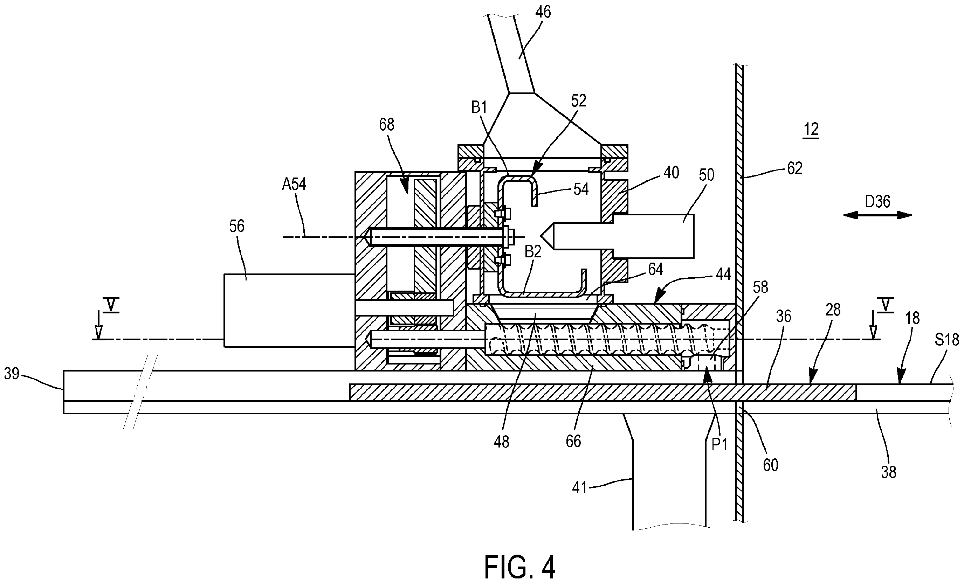

De préférence et comme le montrent les figures 2 et 4, chaque tiroir 36 est monté mobile en translation dans une rainure 38 prévue dans le plan de travail 18 de l'enceinte de fabrication 12 ainsi que dans un logement 39 monté en regard de la rainure prévue dans le plan de travail 18. Un logement 39 est accolé au plan de travail 18. Un tiroir 36 se déplace en translation entre une rainure 38 et un logement 39 de manière à se situer dans le logement 39 lorsqu'il est en position rétractée et dans la rainure 38 lorsqu'il est en position déployée. Une rainure 38 s'étend dans la direction horizontale transversale D36 dans laquelle se déplace un tiroir 36. Un logement 39 s'étend dans la direction horizontale transversale D36 dans laquelle se déplace un tiroir 36. Un logement 39 est relié de manière étanche à l'enceinte de fabrication 12. Chaque rainure 38 s'étend à proximité d'une zone de fabrication 20. Chaque rainure 38 est agencée de manière à ce que la surface de réception de poudre mobile 28 formée par chaque tiroir se déplace dans le plan de travail 18. Autrement dit, lorsqu'un tiroir 36 est en position déployée, la surface de réception 28 formée par ce tiroir se situe dans le prolongement de la surface supérieure S18 du plan de travail. Avantageusement, un logement 39 est équipé d'une trémie 41 de récupération de poudre.

En étant monté mobile en translation à proximité d'une zone de fabrication 20 et dans le plan de travail 18, chaque tiroir 36 occupe un encombrement très réduit à proximité de la zone de fabrication 20.

Chaque surface de réception mobile 28 prenant la forme d'un tiroir mobile en translation, une zone de fabrication 20 prend de préférence une forme rectangulaire. Toutefois, une zone de fabrication 20 peut aussi prendre d'autres formes plus adaptées aux formes de la ou des pièces à fabriquer, comme par exemple une forme circulaire, ovale, ou annulaire.

En vue de la réalisation d'une couche de poudre sur la zone de fabrication 20, un dispositif de distribution de poudre 32 délivre de la poudre sous forme d'un cordon sur la surface de réception de poudre mobile 28 formée par un tiroir, puis la raclette et/ou le ou les rouleaux du dispositif d'étalement de poudre étalent la poudre déposée sous forme de cordon sur la zone de fabrication 20.

Pour la réalisation d'un cordon de poudre sur une surface de réception de poudre mobile 28, cette surface de réception se déplace en translation sous un dispositif de distribution de poudre 32. Pour maîtriser au mieux la quantité de poudre déposée sur la surface de réception mobile 28 et donc la qualité du cordon de poudre, la présente invention propose un dispositif de distribution de poudre permettant de délivrer un débit de poudre stable et maîtrisé en au moins un point de distribution sous lequel se déplace une surface de réception de poudre mobile.

Selon l'invention et comme illustré par les figures 2, 3 et 4, un tel dispositif de distribution de poudre 32 comprend un réservoir tampon 40 relié à une alimentation en poudre 42 et un point de distribution de poudre P1 en-dessous duquel se déplace une surface de réception mobile 28.

Toujours selon l'invention, ce dispositif de distribution de poudre 32 comprend aussi un doseur à vis 44 reliant le réservoir tampon 40 et le point de distribution de poudre P1 et permettant de générer un flux continu de poudre du réservoir tampon 40 vers le point de distribution de poudre P1.

Une surface de réception de poudre 28 étant mobile, un dispositif de distribution de poudre 32 est de préférence monté fixe par rapport à l'enceinte de fabrication 12 et au bâti de la machine. Le montage fixe d'un dispositif de distribution de poudre 32 facilite son alimentation en poudre.

L'alimentation en poudre 42 prend de préférence la forme d'une vanne 43 à laquelle est reliée de manière amovible un container 45. Le container 45 contient la poudre destinée à alimenter le réservoir tampon 40 d'un dispositif de distribution 32. La vanne 43 permet d'autoriser ou d'interdire le passage de la poudre vers un dispositif de distribution de poudre 32. Une fois vidé de sa poudre, le container en place est remplacé par un nouveau container rempli de poudre. Avantageusement, le container contient une quantité suffisante de poudre, de l'ordre de plusieurs dizaines de litres de poudre, pour la réalisation d'un cycle entier de fabrication additive. En effet, il n'est pas envisageable de stopper un cycle de fabrication pour remplacer un container vide par un container rempli de poudre. Alternativement, l'alimentation en poudre 42 peut aussi prendre la forme d'un circuit d'alimentation de poudre automatisé et permettant par exemple d'alimenter en poudre une pluralité de machines de fabrication additive.

Comme l'illustre la figure 2, le réservoir tampon 40 d'un dispositif de distribution de poudre 32 est relié à une alimentation en poudre 42, et notamment à la vanne 43, par un conduit 46. Dans le cas où la machine 10 comprend deux dispositifs de distribution de poudre 32 prévus de part et d'autre d'une même zone de fabrication, ces deux dispositifs de distribution de poudre 32 sont de préférence reliés à une même alimentation en poudre 42, et donc à une même vanne 43.

Afin de permettre l'écoulement par gravité de la poudre de l'alimentation en poudre 42 vers le réservoir tampon 40 d'un dispositif de distribution de poudre 32, un conduit 46 est de préférence monté avec une inclinaison d'au moins cinq degrés par rapport à une direction horizontale.

De préférence, un conduit 46 est métallique et rigide, et par exemple réalisé en acier inoxydable.

Un réservoir tampon 40 contient toujours une quantité de poudre minimale pour gaver en poudre l'entrée 48 du doseur à vis 44. Pour donner un ordre d'idées, un réservoir tampon 40 offre une contenance d'environ un demi-litre de poudre, et il contient toujours au moins dix centilitres de poudre pendant un cycle de fabrication. Afin de maintenir cette quantité de poudre minimale dans un réservoir tampon 40, un dispositif de distribution de poudre 32 comprend un détecteur 50 du niveau de poudre dans le réservoir tampon 40. Ce détecteur 50 prend la forme d'un capteur capacitif haute fréquence, ou d'un capteur équivalent en fonctionnalités, permettant de détecter des poudres métalliques ou non-métalliques comme par exemple des poudres de céramique. Lorsque ce détecteur 50 mesure une quantité insuffisante de poudre dans le réservoir tampon 40, la vanne 43 est commandée de manière à délivrer de la poudre vers le réservoir tampon 40 via un conduit 46.

En complément du détecteur de poudre 50, un dispositif de distribution de poudre 32 comprend un dispositif de dévraquage 52 de la poudre contenue dans un réservoir tampon 40. Ce dispositif de dévraquage 52 permet d'éviter l'apparition de voûtes de poudre dans un réservoir tampon 40, et donc d'éviter une alimentation en poudre irrégulière du doseur à vis 44. Le dispositif de dévraquage 52 prend la forme d'une lame 54 entraînée en mouvement par un actionneur 56 à l'intérieur du réservoir tampon 40. La lame 54 est entraînée en rotation à l'intérieur du réservoir tampon 40. De préférence, la lame 54 comprend deux bras B1,B2 s'étendant de part et d'autre de son axe de mise en rotation A54 et à une distance non nulle de cet axe de mise en rotation A54. Pour favoriser le dévraquage, un des bras B1 est plus court que l'autre bras B2. Toujours pour favoriser le dévraquage, les deux bras B1 et B2 sont recourbés à leur extrémité libre. En variante, des vibrations ou des ultrasons peuvent être utilisés en lieu et place d'une lame 54 pour effectuer le dévraquage à l'intérieur du réservoir tampon 40.

Comme indiqué précédemment, un dispositif de distribution de poudre 32 permet de délivrer un débit de poudre stable et maîtrisé en un point de distribution P1 sous lequel se déplace une surface de réception de poudre mobile 28. Plus en détail, la sortie 58 du doseur à vis 44 correspond au point de distribution de poudre P1. Comme l'illustre la figure 4, un dispositif de distribution de poudre 32 est monté au-dessus du logement 39 dans lequel un tiroir 36 se déplace en translation. Plus précisément, le doseur à vis 44 est monté au-dessus du logement 39 recevant le tiroir 36 en position rétractée. Ainsi, la sortie 58 du doseur à vis P1 se situe au-dessus du tiroir 36 en position rétractée.

Afin de préserver les qualités de la poudre et d'éviter les risques d'oxydation, un point de distribution de poudre P1 se situe dans un logement 39 accolé au plan de travail 18 et relié de manière étanche à l'enceinte de fabrication 12. Comme illustré en figure 4, un logement 39 communique avec l'enceinte de fabrication 12 via une ouverture 60 prévue dans une paroi 62 de cette enceinte. Ainsi, le ou les gaz inertes présents dans l'enceinte de fabrication 12 sont aussi présents à l'intérieur d'un logement 39 où se situe un point de distribution de poudre P1. Plus en détail, le ou les gaz inertes présents dans l'enceinte de fabrication 12 sont aussi présents dans le doseur à vis 44, dans le réservoir tampon 40, dans le ou les conduits 46, dans la vanne 43 et dans le container 45. Ainsi, les qualités de la poudre sont protégées du container 45 jusqu'à la zone de fabrication 20. Aussi, l'enceinte de fabrication 12, un logement 39, un doseur à vis 44, un réservoir tampon 40, un conduit 46, la vanne 43 et le container 45 sont tous reliés de manière étanche.

Alternativement et pour limiter l'encombrement d'un dispositif de distribution de poudre 32 à l'extérieur de l'enceinte de fabrication, la sortie 58 du doseur à vis 44 correspondant au point de distribution de poudre P1 peut se situer à l'intérieur de l'enceinte de fabrication 12 tandis que le réservoir tampon 40 se situe toujours à l'extérieur de l'enceinte de fabrication.

Comme l'illustre la figure 4, le réservoir tampon 40 est monté de manière rigide au-dessus de l'entrée 48 du doseur à vis 44. Idéalement, et pour éviter la création de voûtes ou d'agglomérats de poudre, la sortie 64 du réservoir tampon 40 a une section sensiblement identique (forme et dimensions) à la section de l'entrée 48 du doseur à vis 44. Dans le même objectif, le réservoir tampon 40 a une section constante sur toute sa hauteur H40, et la sortie 64 du réservoir tampon 40 a une section sensiblement identique (forme et dimensions) à la section du réservoir tampon 40 sur toute sa hauteur H40.

Dans la présente invention, c'est la combinaison d'un réservoir tampon 40 avec un doseur à vis 44 qui permet de délivrer un débit de poudre stable et maîtrisé au point de distribution P1.

Le doseur à vis 44 comprend deux vis V1,V2 de transport de poudre juxtaposées dans un même fourreau 66 et entraînées en rotation à l'intérieur de ce fourreau. L'utilisation de deux vis permet de mieux stabiliser le débit de poudre en sortie du doseur.

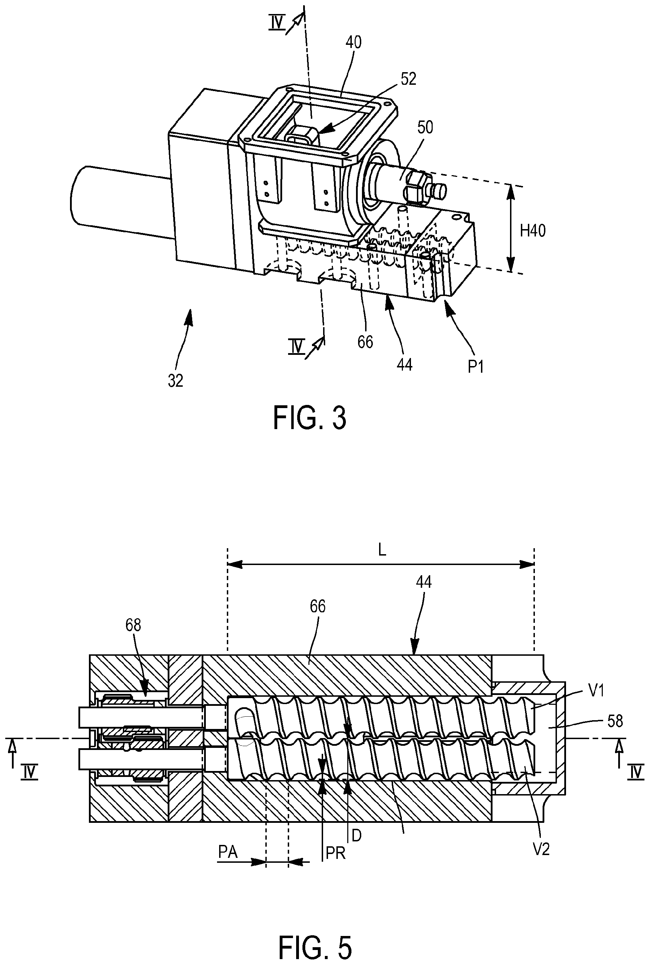

Selon une première variante illustrée en figure 5, les deux vis V1,V2 du doseur ont des pas orientés dans le même sens. En ayant des pas orientés dans le même sens, les deux vis permettent de stabiliser mieux encore le débit de poudre en sortie du doseur.

Selon une seconde variante, les deux vis V1,V2 du doseur ont des pas orientés dans des sens opposés.

Toujours en vue d'obtenir un débit de poudre le plus stable possible en sortie du doseur, les deux vis V1,V2 du doseur sont synchronisées en rotation et les deux vis V1,V2 du doseur tournent dans le même sens horaire ou antihoraire. A cet effet, les deux vis V1 et V2 sont entraînées en rotation par un même actionneur 56. Plus en détail, les deux vis V1 et V2 sont entraînées par un même moteur 56 via un engrenage 68.

Les deux vis V1,V2 sont montées parallèlement l'une à l'autre dans le fourreau 66. Les deux vis V1,V2 sont de même longueur et leur longueur L est d'environ vingt-deux centimètres. Les deux vis V1, V2 ont un même diamètre extérieur D d'environ deux centimètres. Les deux vis V1, V2 ont des filets identiques d'un pas PA de onze millimètres et d'une profondeur PR de trois millimètres. Les deux vis V1, V2 sont juxtaposées de manière à ce qu'un jeu de seulement 0,1 millimètre les sépare dans le fourreau 66. De même, seul un jeu de 0,1 millimètre est présent entre les vis et la paroi interne 67 du fourreau 66. Les deux vis V1,V2 ont des filets concaves, c'est-à-dire présentant un profil en creux de forme arrondie, favorisant l'entrainement de la poudre vers le point de distribution de poudre.

Le moteur 56 entrainant les deux vis V1 et V2 en rotation permet aussi d'entraîner en rotation la lame 54 du dispositif de dévraquage 52 via l'engrenage 68.

Avantageusement, en faisant varier la vitesse de déplacement de la surface de réception mobile 28, et donc d'un tiroir 36, lors d'une distribution de poudre, il est possible de faire varier la hauteur du cordon de poudre déposé sur le tiroir 36. Cela permet d'ajuster au mieux la quantité de poudre déposée sur la surface de réception mobile 28 à une zone de fabrication 20 présentant au moins deux longueurs différentes dans la direction horizontale D35 de translation du chariot 35, comme par exemple dans le cas d'une zone de fabrication 20 circulaire.

Une fois le cordon de poudre déposé sur une surface de réception mobile 28 via le point de distribution P1, le dispositif d'étalement 30 est mis en translation de manière à étaler la poudre sur la zone de fabrication 20.

De préférence, le container 45, la vanne 43, le ou les conduits 46, le ou les réservoirs tampon 40 et le ou les vis et le fourreau du doseur 40 sont réalisés dans un acier inoxydable et amagnétique afin d'éviter de magnétiser les poudres métalliques.

Idéalement, un point de distribution de poudre P1 se situe à environ deux centimètres au-dessus d'une surface de réception mobile 28. Cette hauteur est suffisante pour permettre la dépose d'un cordon de poudre de plusieurs millimètres de hauteur sur la surface de réception mobile 28 et pour éviter de projeter de la poudre au-delà de la surface de réception mobile 28.

## Revendications

1. Machine (10) de fabrication additive par dépôt de lit de poudre, cette machine de fabrication additive comprenant une enceinte de fabrication (12) et au moins une source de chaleur ou d'énergie (14) utilisée pour fusionner de manière sélective une couche de poudre de fabrication additive déposée à l'intérieur de l'enceinte de fabrication, la machine de fabrication additive comprenant au moins une surface de réception de poudre mobile (28) et apte à se déplacer à proximité d'une zone de fabrication (20) située dans l'enceinte de fabrication, un dispositif d'étalement de poudre (30) permettant d'étaler la poudre de la surface de réception mobile vers la zone de fabrication, et au moins un dispositif de distribution de poudre (32) sur la surface de réception mobile, le dispositif de distribution de poudre comprenant un réservoir tampon (40) relié à une alimentation en poudre (42) et un point de distribution de poudre (P1) en-dessous duquel se déplace une surface de réception mobile (28), le dispositif de distribution de poudre comprenant un doseur à vis (44) reliant le réservoir tampon (40) et le point de distribution de poudre (P1) et permettant de générer un flux continu de poudre du réservoir tampon vers le point de distribution de poudre, le doseur à vis (44) comprenant un fourreau (66) et deux vis (V1,V2) de transport de poudre juxtaposées dans ce fourreau (66) et entraînées en rotation à l'intérieur de ce fourreau, la machine de fabrication additive étant **caractérisée en ce que** les deux vis du doseur (V1,V2) sont synchronisées en rotation et les deux vis (V1,V2) du doseur tournent dans le même sens horaire ou antihoraire, et **en ce que**, un dispositif de distribution de poudre (32) comprenant un dispositif de dévraquage (52) de la poudre contenue dans le réservoir tampon et ce dispositif de dévraquage (52) prenant la forme d'une lame (54) entraînée en mouvement par un actionneur à l'intérieur du réservoir tampon, les deux vis (V1,V2) sont entraînées en rotation par un même moteur (56) via un engrenage (68) et le moteur (56) entrainant les deux vis (V1,V2) en rotation permet aussi d'entraîner en rotation la lame (54) du dispositif de dévraquage (52) via l'engrenage (68).

2. Machine (10) de fabrication additive par dépôt de lit de poudre selon la revendication 1, dans laquelle les deux vis du doseur (V1,V2) ont des pas orientés dans le même sens.

3. Machine (10) de fabrication additive par dépôt de lit de poudre selon la revendication 1, dans laquelle les deux vis du doseur (V1,V2) ont des pas orientés dans des sens opposés.

4. Machine (10) de fabrication additive par dépôt de lit de poudre selon l'une des revendications précédentes, dans laquelle un dispositif de distribution de poudre (32) comprend un détecteur (50) du niveau de poudre dans le réservoir tampon.

5. Machine (10) de fabrication additive par dépôt de lit de poudre selon l'une des revendications précédentes, dans laquelle, l'enceinte de fabrication comprenant un plan de travail horizontal (18) et au moins une zone de fabrication (20) se situant dans ce plan de travail, un point de distribution de poudre (P1) se situe dans un logement (39) accolé au plan de travail (18) et relié de manière étanche à l'enceinte de fabrication (12).

6. Machine (10) de fabrication additive par dépôt de lit de poudre selon l'une des revendications précédentes, dans laquelle la machine de fabrication additive comprend deux surfaces de réception de poudre mobiles (28) et deux dispositifs de distribution de poudre (32), chaque surface de réception de poudre mobile réceptionnant de la poudre distribuée par au moins un dispositif de distribution.

7. Machine (10) de fabrication additive par dépôt de lit de poudre selon l'une des revendications précédentes, dans laquelle une surface de réception de poudre mobile (28) prend la forme d'un tiroir (36) monté mobile en translation dans une direction horizontale transversale (D36) par rapport à la zone de fabrication (20).

8. Machine (10) de fabrication additive par dépôt de lit de poudre selon la revendication 7, dans laquelle, l'enceinte de fabrication (12) comprenant un plan de travail horizontal (18) et au moins une zone de fabrication (20) se situant dans ce plan de travail, chaque tiroir (36) est monté mobile en translation dans une rainure (38) prévue dans le plan de travail (18) ainsi que dans un logement (39) monté en regard de la rainure (38) prévue dans le plan de travail (18).

9. Machine (10) de fabrication additive par dépôt de lit de poudre selon la revendication 8, dans laquelle un dispositif de distribution de poudre (32) est monté au-dessus du logement (39) dans lequel un tiroir (36) se déplace en translation.

## Patentansprüche

1. Maschine (10) zur generativen Fertigung durch Aufbringen eines Pulverbetts, wobei diese Maschine zur generativen Fertigung einen Fertigungsraum (12) umfasst und mindestens eine Wärme- oder Energiequelle (14), die dazu verwendet wird, eine Schicht Pulver zur generativen Fertigung, die im Inneren des Fertigungsraums aufgebracht wird, selektiv zu schmelzen, wobei die Maschine zur generativen Fertigung mindestens eine Pulveraufnahmefläche (28), die beweglich ist und geeignet ist, sich in der Nähe eines im Inneren des Fertigungsraums gelegenen Fertigungsbereichs (20) zu verlagern, eine Pulverausbreitvorrichtung (30), die es ermöglicht, das Pulver von der beweglichen Aufnahmefläche zum Fertigungsbereich hin zu auszubreiten, und mindestens eine Pulververteilungsvorrichtung (32) zum Verteilen von Pulver auf der beweglichen Aufnahmefläche umfasst, wobei die Pulververteilungsvorrichtung einen Pufferbehälter (40) umfasst, der mit einer Pulverzuführung (42) verbunden ist, und eine Pulverteilungsstelle (P1), unter der sich eine bewegliche Aufnahmefläche (28) bewegt, wobei die Pulververteilungsvorrichtung einen Schneckendosierer (44) umfasst, der den Pufferbehälter (40) und die Pulververteilungsstelle (P1) verbindet und es ermöglicht, einen kontinuierlichen Pulverstrom von dem Pufferbehälter zu der Pulververteilungsstelle zu erzeugen, wobei der Schneckendosierer (44) eine Ummantelung (66) umfasst und zwei Pulverförderschnecken (V1, V2), die in dieser Ummantelung (66) nebeneinander liegen und im Inneren dieser Ummantelung drehangetrieben werden, wobei die Maschine zur generativen Fertigung **dadurch gekennzeichnet ist, dass** die beiden Schnecken des Dosierers (V1, V2) drehsynchronisiert sind und die beiden Schnecken (V1, V2) des Dosierers gleichsinnig im oder gegen den Uhrzeigersinn laufen, und dadurch, dass, wenn die Pulververteilungsvorrichtung (32) eine Auflockerungsvorrichtung (52) zum Auflockern des in dem Pufferbehälter enthaltenen Pulvers umfasst und diese Auflockerungsvorrichtung (52) die Form einer Klinge (54) annimmt, die von einem Aktor im Inneren des Pufferbehälters bewegt wird, die beiden Schnecken (V1, V2) von einem selben Motor (56) über ein Getriebe (68) drehangetrieben werden und der Motor (56), der die beiden Schnecken (V1, V2) drehantreibt, es auch ermöglicht, die Klinge (54) der Auflockerungsvorrichtung (52) über das Getriebe(68) drehanzutreiben.

2. Maschine (10) zur generativen Fertigung durch Aufbringen eines Pulverbetts nach Anspruch 1, bei der die beiden Schnecken des Dosierers (V1, V2) Steigungen haben, die gleichsinnig ausgerichtet sind.

3. Maschine (10) zur generativen Fertigung durch Aufbringen eines Pulverbetts nach Anspruch 1, bei der die beiden Schnecken des Dosierers (V1, V2) Steigungen haben, die gegensinnig ausgerichtet sind.

4. Maschine (10) zur generativen Fertigung durch Aufbringen eines Pulverbetts nach einem der vorhergehenden Ansprüche, bei der eine Pulververteilungsvorrichtung (32) einen Detektor (50) für den Pulverfüllstand in dem Pufferbehälter umfasst.

5. Maschine (10) zur generativen Fertigung durch Aufbringen eines Pulverbetts nach einem der vorhergehenden Ansprüche, bei der, wenn der Fertigungsraum eine horizontale Arbeitsebene (18) und mindestens einen in dieser Arbeitsebene gelegenen Fertigungsbereich (20) umfasst, eine Pulververteilungsstelle (P1) in einer Aufnahme (39) gelegen ist, die an der Arbeitsebene (18) anliegt und mit dem Fertigungsraum (12) dicht verbunden ist.

6. Maschine (10) zur generativen Fertigung durch Aufbringen eines Pulverbetts nach einem der vorhergehenden Ansprüche, bei der die Maschine zur generativen Fertigung zwei bewegliche Pulveraufnahmeflächen (28) und zwei Pulververteilungsvorrichtungen (32) umfasst, wobei jede bewegliche Pulveraufnahmefläche Pulver aufnimmt, das von mindestens einer Verteilungsvorrichtung verteilt wird.

7. Maschine (10) zur generativen Fertigung durch Aufbringen eines Pulverbetts nach einem der vorhergehenden Ansprüche, bei der eine bewegliche Pulveraufnahmefläche (28) die Form eines Schiebers (36) annimmt, der in einer horizontalen Querrichtung (D36) in Bezug auf den Fertigungsbereich (20) translatorisch beweglich montiert ist.

8. Maschine (10) zur generativen Fertigung durch Aufbringen eines Pulverbetts nach Anspruch 7, bei der, wenn der Fertigungsraum (12) eine horizontale Arbeitsebene (18) und mindestens einen in dieser Arbeitsebene gelegenen Fertigungsbereich (20) umfasst, jeder Schieber (36) translatorisch beweglich in einer Nut (38) montiert ist, die in der Arbeitsebene (18) vorgesehen ist, sowie in einer Aufnahme (39), die gegenüber der in der Arbeitsebene (18) vorgesehenen Nut (38) montiert ist.

9. Maschine (10) zur generativen Fertigung durch Aufbringen eines Pulverbetts nach Anspruch 8, bei der eine Pulververteilungsvorrichtung (32) über der Aufnahme (39) montiert ist, in der sich ein Schieber (36) translatorisch verlagert.

## Claims

1. Powder bed fusion additive manufacturing machine (10), this additive manufacturing machine comprising a manufacturing chamber (12) and at least one source (14) of heat or of energy used to selectively melt a layer of an additive manufacturing powder deposited inside the manufacturing chamber, the additive manufacturing machine comprising at least one mobile powder-receiving surface (28) able to move in the vicinity of a manufacturing zone (20) situated inside the manufacturing chamber, a powder-spreading device (30) for spreading the powder on the mobile receiving surface towards the manufacturing zone, and at least one powder-distribution device (32) distributing powder over the mobile receiving surface, the powder-distribution device comprising a buffer reservoir (40) connected to a powder supply (42), and a powder-distribution point (P1) beneath which a mobile receiving surface (28) moves, the powder-distribution device comprising a screw-type metering device (44) connecting the buffer reservoir (40) and the powder-distribution point (P1) and enabling the generation of a continuous stream of powder from the buffer reservoir towards the powder-distribution point, the screw-type metering device (44) comprises a barrel (66) and two powder-conveying screws (V1,V2) juxtaposed inside said barrel (66) and rotationally driven inside this barrel, the additive manufacturing machine being **characterized in that** the two screws of the metering device (V1, V2) are synchronized in rotation and the two screws (V1, V2) of the metering device rotate in the same, clockwise or anticlockwise, direction, and **in that**, the powder-distribution device (32) comprising a powder-unpacking device (52) to loosen the powder contained in the buffer reservoir and the unpacking device (52) adopting the form of a blade (54) driven in its movement by an actuator inside the buffer reservoir, the two screws (V1, V2) are driven in rotation by the same motor (56) via a gearing (68) and the motor (56) driving the rotation of the two screws (V1, V2) is also able to drive the rotation of the blade (54) of the unpacking device (52) via the gearing (68).

2. Powder bed fusion additive manufacturing machine (10) according to Claim 1, wherein the two screws (V1, V2) of the metering device have pitches of the same hand.

3. Powder bed fusion additive manufacturing machine (10) according to Claim 1, wherein the two screws (V1, V2) of the metering device have pitches of opposing hand.

4. Powder bed fusion additive manufacturing machine (10) according to any one of the preceding claims, wherein a powder-distribution device (32) comprises a detector (50) of the level of powder in the buffer reservoir.

5. Powder bed fusion additive manufacturing machine (10) according to any one of the preceding claims, wherein, with the manufacturing chamber comprising a horizontal working plane (18) and at least one manufacturing zone (20) situated in this working plane, a powder-distribution point (P1) is situated in a housing (39) held firmly against the working plane (18) and connected in a fluidtight manner to the manufacturing chamber (12).

6. Powder bed fusion additive manufacturing machine (10) according to any one of the preceding claims, wherein the additive manufacturing machine comprises two mobile powder-receiving surfaces open (28) and two powder-distribution devices (32), each mobile powder-receiving surface receiving powder distributed by at least one distribution device.

7. Powder bed fusion additive manufacturing machine (10) according to any one of the preceding claims, wherein a mobile powder-receiving surface (28) adopts the form of a slide (36) mounted with the ability to effect translational movement in a horizontal direction (D36) that is transverse in relation to the manufacturing zone (20).

8. Powder bed fusion additive manufacturing machine (10) according to Claim 7, wherein, with the manufacturing chamber (12) comprising a horizontal working plane (18) and at least one manufacturing zone (20) situated in this working plane, each slide (36) is mounted with the ability to effect translational movement in a slot (38) provided in the working plane (18) and in a housing (39) mounted opposite the slot (38) provided in the working plane (18).

9. Powder bed fusion additive manufacturing machine (10) according to Claim 8, wherein a powder-distribution device (32) is mounted above the housing (39) in which a slide (36) effects a translational movement.
